# EUROPÄISCHE PATENTSCHRIFT

(11) **EP 3 882 040 B1**
(45) Veröffentlichungstag und Bekanntmachung des Hinweises auf die Patenterteilung: **25.06.2025**
(21) Anmeldenummer: 20164611.4
(22) Anmeldetag: 20.03.2020
(51) Int. Cl.: B44C 1/10, B44C 5/04

(54) **VERFAHREN ZUM AUFBRINGEN EINER FOLIE AUF EINEN TRÄGER MITTELS ELEKTROSTATISCHER BELADUNG**
METHOD FOR APPLYING A FILM TO A SUPPORT USING ELECTROSTATIC CHARGING
PROCÉDÉ D'APPLICATION D'UNE FEUILLE À UN SUPPORT AU MOYEN D'UNE CHARGE ÉLECTROSTATIQUE

(43) Veröffentlichungstag der Anmeldung: 22.09.2021
(73) Patentinhaber: Akzenta Paneele + Profile GmbH, 56759 Kaisersesch (DE)
(72) Erfinder: HANNIG, Hans-Jürgen, 51427 Bergisch Gladbach (DE); WENDLING, Peter, 56290 Mörsdorf (DE)
(74) Vertreter: Michalski Hüttermann & Partner Patentanwälte mbB

(56) Entgegenhaltungen:
- EP-A1- 2 942 208
- EP-A1- 3 034 273
- WO-A1-2018/141912
- AT-A1- 504 620
- DE-A1- 2 201 472
- DE-B- 1 104 679
- FR-A2- 2 414 070

## Beschreibung

Die vorliegende Erfindung betrifft ein Verfahren zur Herstellung eines Dekorpaneels umfassend das Aufbringen einer Folie auf einen Träger. Die vorliegende Erfindung betrifft insbesondere ein Verfahren, bei dem im Rahmen eines Herstellungsprozesses eines Dekorpaneels eine Folie auf einen Träger kaschiert wird.

Unter dem Begriff Dekorpaneel sind im Sinne der Erfindung Wand-, Decken, Tür- oder Bodenpaneele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag, zum Verkleiden von Decken, Wänden oder Türen. Die Dekorpaneele weisen dabei vielfach ein Dekor und eine Oberflächenstrukturierung auf, welche einen Naturwerkstoff imitieren soll.

Im Verlaufe der Herstellung eines Dekorpaneels, beispielsweise, kann es gewünscht sein, auf einen Träger eine Folie zu kaschieren. Anschließend kann der mit der Folie kaschierte Träger noch weitere Behandlungsschritte durchlaufen oder kann derart verbleiben.

Nachteilig aus den im Stand der Technik bekannten Verfahren ist es, dass nach dem Aufkaschieren einer Folie auf einen Träger gegebenenfalls eine Mikroblasenbildung auftreten kann. Diese kann jedoch die Qualität des Produkts herabsetzen und deshalb zu Ausschuss führen.

DE 2201472 A1 offenbart ein Verfahren zur Herstellung von vergüteten Platten, wobei auf die zu vergütenden Platten oberseitig und/oder unterseitig Vergütungsfolien aufgelegt und diese an den zu vergütenden Platten fixiert werden. Dabei werden die Vergütungsfolien und/oder die zu vergütenden Platten elektrostatisch aufgeladen und die Vergütungsfolien an der zu vergütenden Platten durch die elektrostatischen Kräfte fixiert.

WO 2018/141912 A1 offenbart ein Verfahren zur Behandlung von PVC Platten sowie hieraus hergestellte Platten und Paneele. Weiter betrifft die Erfindung Platten, sowie Paneele, insbesondere Wand-, Decken- oder Fußbodenpaneele, umfassend eine wärmebehandelte Trägerplatte basierend auf Polyvinylchlorid mit einer Dichte von bspw. 900 bis 2.500 kg/m3 und einer darauf befestigten Folie. Die Folie ist dabei eine dünne PVC-Folie und umfasst ein darauf direkt aufgedrucktes dekoratives Muster.

Das Kaschieren einer Folie auf einen Träger, beispielsweise im Rahmen der Herstellung eines Dekorpaneels, kann deswegen unter Umständen noch Verbesserungspotential bieten.

Es ist daher die Aufgabe der vorliegenden Erfindung, wenigstens einen Nachteil des Stands der Technik zumindest teilweise zu überwinden. Im Detail ist es die Aufgabe der vorliegenden Erfindung eine Lösung für ein verbessertes Kaschieren einer Folie auf einen Träger, beispielsweise im Rahmen der Herstellung eines Dekorpaneels, zu schaffen.

Gelöst wird diese Aufgabe durch ein Verfahren zur Herstellung eines Dekorpaneels umfassend das Aufbringen einer Folie auf einen Träger mit den Merkmalen gemäß Anspruch 1. Bevorzugte Ausgestaltungen der Erfindung sind in den Unteransprüchen oder in der Beschreibung angegeben.

Mit der Erfindung wird ein Verfahren zur Herstellung eines Dekorpaneels umfassend das Aufbringen einer Folie auf einen Träger vorgeschlagen, aufweisend die Verfahrensschritte:
a) Bereitstellen eines mit der Folie zu versehenden Trägers,
b) Bereitstellen einer Folie, und
c) Aufbringen der Folie auf zumindest einen Teilbereich des Trägers,
g) Einbringen von Verriegelungsmitteln an der Kante des Trägers, und
h) Aufbringen eines Dekors auf den Träger vor dem Aufbringen der Folie auf den Träger oder Aufbringen eines Dekors auf die Folie, dadurch gekennzeichnet,
dass d) die Folie vor dem Aufbringen auf den Träger elektrostatisch beladen wird, und
e) der Träger vor dem Aufbringen der Folie auf den Träger elektrostatisch beladen wird, wobei
f) die elektrostatische Beladung des Trägers (14) und der Folie (12) derart ausgeführt wird, dass die Folie (12) und der Träger (14) entgegengesetzt elektrostatisch beladen werden, wobei
die Folie (12) positiv beladen wird auf einen Bereich von ≥ 50V bis ≤ 150V und der Träger (14) negativ beladen wird auf einen Bereich von ≥ -750V bis ≤ -150V.

Durch ein derartiges Verfahren kann im Herstellungsprozess eines Dekorpaneels ein verbessertes Aufbringen einer Folie auf einen Träger ermöglicht werden.

Das vorliegende Verfahren dient insbesondere dem Aufbringen einer Folie auf einen Träger. Ein derartiges Verfahren wird auch als Kaschieren bezeichnet und kann grundsätzlich in vielfältigen Anwendungsgebieten Verwendung finden. Besonders vorteilhaft kann es jedoch sein, wenn das beschriebene Verfahren im Rahmen der Herstellung eines Dekorpaneels verwendet wird.

Das Verfahren umfasst die folgenden Schritte.

Zunächst erfolgt gemäß Verfahrensschritt a) das Bereitstellen eines Trägers, welcher mit der Folie versehen werden soll beziehungsweise auf welchen die Folie aufgebracht werden soll. Die Art des Trägers ist nicht grundsätzlich beschränkt, insoweit der Träger als Unterlage beziehungsweise Substrat für die Folie dienen kann. In anderen Worten kann grundsätzlich unter einem Träger jegliche Struktur verstanden werden, welche als Untergrund für eine aufzukaschierende Folie dient. Für den Fall der Herstellung eines Dekorpaneels kann der Träger jedoch ein hierfür geeigneter Träger sein. Unter einem Träger kann dann insbesondere eine in einem fertig gestellten Paneel als Kern beziehungsweise als Basislage dienende Lage verstanden werden, die insbesondere einen Naturstoff, wie etwa einen Holzwerkstoff, einen Faserwerkstoff oder einen Werkstoff umfassend einen Kunststoff aufweisen kann. Beispielsweise kann der Träger einem Paneel eine geeignete Stabilität verleihen oder zu dieser beitragen. Der Träger kann dabei insbesondere ein bahnartiger Träger oder plattenförmiger Träger sein. Erfindungsgemäß ist ein derartiger Träger aus Kunststoff ausgebildet, wobei einer derartiger Träger aus reinem Kunststoff oder einem Kunststoffwerkstoff ausgebildet sein kann. Ein Kunststoffwerkstoff soll dabei ein Material sein, das neben dem reinen Kunststoff noch weitere Bestandteile, insbesondere Füllstoffe, wie etwa mineralische beziehungsweise anorganische Bestandteile, aufweisen kann.

Weiterhin umfasst das Verfahren gemäß Verfahrensschritt b) das Bereitstellen einer Folie, welche auf den Träger aufgebracht werden soll. Die Ausgestaltung der Folie ist nicht grundsätzlich beschränkt und insbesondere abhängig von der späteren Verwendung der Folie beziehungsweise des Verbunds aus Folie und Träger. Erfindungsgemäß ist die Folie aus einem Kunststoff, bevorzugt einem thermoplastischen Kunststoff, ausgebildet. Beispielsweise kann die Folie mittels einer Zuführeinrichtung bereitgestellt werden, wobei die Folie etwa unter Verwendung von Walzen zu dem Träger und auf dessen Oberfläche geführt werden kann.

Anschließend erfolgt gemäß Verfahrensschritt c) das Aufbringen der Folie auf zumindest einen Teilbereich des Trägers. Somit kann beispielsweise der gesamte Träger, etwa eine gesamte Oberfläche des Trägers, mit der Folie versehen werden, oder kann der Träger nur teilweise mit der Folie versehen werden.

Dies kann beispielsweise realisiert werden, indem die Folie wie vorstehend beschrieben zu dem Träger geführt wird und anschließend, beispielsweise mittels einer Walze, etwa unter Verwendung von zu der Raumtemperatur (22°C) erhöhter Temperatur und zu Umgebungsdruck (1bar) erhöhtem Druck auf den Träger gepresst wird. Dieser Verfahrensschritt kann auch als Kaschieren beschrieben werden und kann grundsätzlich in wählbarer Form ausführbar sein. Beispielsweise soll im Rahmen der Erfindung ein Nasskaschieren oder ein Trockenkaschieren umfasst sein, bei dem das Kaschieren mittels eines nassen oder trockenen Kaschiermittels ausgeführt wird. Beispielsweise kann auf den Träger, etwa auf ein auf dem Träger aufgebrachtes Dekor, eine Lackschicht vorgesehen sein, die als flüssiges Kaschiermittel dient. Aber auch ein trockenes Kaschiermittel ist grundsätzlich möglich.

Ferner ist wie vorstehend angedeutet ein Thermokaschieren umfasst, bei dem das Kaschieren mit erhöhter Temperatur und mit erhöhtem Druck, jedoch insbesondere ohne ein Kaschiermittel, ausgeführt wird. Die zu wählenden Parameter wie Temperatur und Druck können dabei von dem Fachmann in verständlicher Weise basierend auf den Materialien des Trägers und der Folie gewählt werden.

Thermische Kaschierparameter sind materialabhängig. Grundsätzlich sind die thermischen Kaschierparameter hinsichtlich des Materials von Folie und Träger bei thermoplastischen Materialien im Bereich größer des Vicat Erweichungspunkts sowie kleiner des Schmelzpunktes (bei (teil-)kristallinen Polymeren) zu wählen, ferner oberhalb des Tg, etwa bei PET. Wenn die thermischen Parameter optimiert wurden, ist nur sehr geringer Druck notwendig. Dies insbesondere dann, wenn Träger und Folie gut aneinander angepasst sind. Beispielhafte Werte umfassen hier beispielsweise für Polypropylen eine Temperatur von 140 bis 155 °C und einen Druck von 1 bis 10 bar, oder für PETG (Glykol-modifiziertes PET) eine Temperatur von 90 bis 110°C, und einen Druck von 1 bis 10 bar.

Sind Träger und Folie aus unterschiedlichen Polymeren, sollte grundsätzlich mit Klebstoff und/oder Verbindungschicht oder Hotmelt als Kaschiermittel gearbeitet werden. Coextrudierte thermoplastische Funktionsschichten, die fest mit Träger oder Folie bei der Herstellung verbunden werden, sind als Verbindungsschicht auch denkbar, wie etwa EVA (Ethylen-Vinylacetat-Copolymer) oder ein gepfropftes MAH (Maleinsäureanhydridaufgepropftes Polymer). Die Kaschierparameter werden dann auf diese Funktionsschichten zwischen Folie und Träger eingestellt. Beispielhafte Parameter umfassen dann etwa für EVA eine Temperatur von 70°C bis 100 °C, abhängig vom Vinyl-Acetatanteil im EVA, und einen Druck von 1 bis 10 bar.

Nach diesem Schritt kann die Folie fest auf dem Träger fixiert sein. Gegebenenfalls kann eine Nachbehandlung, wie etwa eine Trocknung oder ein Härten des Kaschiermittels oder auch der Folie, erfolgen, wenn dies notwendig ist.

Bei dem beschriebenen Verfahren ist es ferner vorgesehen, dass gemäß Verfahrensschritt d) die Folie vor dem Aufbringen auf den Träger elektrostatisch beladen wird und dass gemäß Verfahrensschritt e) der Träger vor dem Aufbringen der Folie auf den Träger elektrostatisch beladen wird. Eine elektrostatische Beladung kann dabei grundsätzlich erfolgen, wie es aus dem Stand der Technik auf anderen Gebieten bekannt und später im Detail beschrieben ist. Grundsätzlich ist es jedoch vorgesehen, dass die elektrostatische Beladung des Trägers und der Folie derart ausgeführt wird, dass die Folie und der Träger entgegengesetzt elektrostatisch beladen werden. Erfindungsgemäß wird der Träger negativ geladen und die Folie positiv geladen.

Durch diesen Verfahrensschritt kann es erlaubt werden, dass zwischen dem Träger und der Folie eine elektrostatische Anziehung vorliegt. Dies erlaubt ein besonders inniges Vorliegen beziehungsweise, wenn der Träger in einer großen Fläche mit der Folie versehen wird.

Das innige Anliegen und ferner Anhaften der Folie an dem Träger kann so ermöglichen, dass Lufteinschlüsse sicher verhindert oder gegenüber den Verfahren aus dem Stand der Technik zumindest deutlich reduziert werden können. Durch das Verhindern oder Reduzieren von Lufteinschlüssen kann ferner im Weiteren das Ausbilden von Blasenbildungen, etwa in Form von Mikroblasenbildungen, ebenfalls verhindert oder zumindest deutlich reduziert werden. Dies erlaubt eine besonders hohe Qualität der Oberfläche, so dass Ausschuss reduziert beziehungsweise auf Blasenbildungen basierender Ausschuss reduziert oder sogar vollkommen verhindert werden kann.

Darüber hinaus kann so eine Langzeitstabilität verbessert werden. Denn durch ein inniges Haften der Folie an dem Träger vor dem Kaschieren, hervorgerufen durch die elektrostatischen Beladungen von Träger und Folie, kann auch das Kaschieren ein besonders inniges Haften der Folie an dem Träger ermöglichen. Dadurch kann die Gefahr eines späteren Ablösens der Folie von dem Träger deutlich verringert werden. Denn bei einer gegebenenfalls gleichliegenden Beladung von Folie und Träger ist die Gefahr eines Abstoßens auch nach der Kaschierung nicht auszuschließen. Dies kann nun aber erfindungsgemäß gerade verhindert werden.

Die vorbeschriebenen Vorteile, hervorgerufen durch eine entsprechende Beladung von Träger und Folie, können durch das hier beschriebene Verfahren auf einfache Weise auch bei bereits bestehenden Systemen zur Folienkaschierung erreicht werden. Denn zur Implementierung des beschriebenen Verfahrens brauchen lediglich entsprechende Einrichtungen zur elektrostatischen Beladung von Folie und Träger vorgesehen werden, was jedoch auch bei bestehenden Systemen meist problemlos nachrüstbar sein kann.

Erfindungsgemäß erfolgt die elektrostatische Aufladung derart, dass die Folie positiv beladen wird und dass der Träger negativ beladen wird. Es hat sich gezeigt, dass das Prozessieren von Folie und Träger mit einer derartigen Aufladung problemlos möglich ist. Darüber hinaus kann grundsätzlich gemäß der Erfindung aber besonders effektiv in dieser Ausgestaltung eine Verringerung der Lackauftragsmenge etwa als Kaschiermittel bei einer Nasskaschierung ermöglicht werden, wobei beispielsweise eine Reduzierung bis auf 40g/m², beispielsweise bis zu 30g/m² oder sogar darunter möglich sein kann. Ferner kann grundsätzlich gemäß der Erfindung aber besonders effektiv in dieser Ausgestaltung eine Reduzierung des Kalanderdrucks ermöglicht werden, was eine Reduzierung des Verschleißes ermöglichen kann.

Dabei ist vorgesehen, dass die Folie beladen wird auf einen Bereich von ≥ 50V bis ≤ 150V, bevorzugt ≥ 80V bis ≤ 120V, etwa 100V. Zusätzlich ist vorgesehen, dass der Träger beladen wird auf einen Bereich von ≥ -750V bis ≤ -150V, bevorzugt ≥ -600V bis ≤ -400V, etwa -500V. Derartige Ladungswerte sind problemlos umsetzbar auch unter Verwendung von problemlos erhältlichen Mitteln zur elektrostatischen Beladung. Darüber hinaus kann eine derartige entgegengesetzte Aufladung besonders effektiv ein inniges auch großflächiges Anhaften von Folie an Platte ermöglichen und dabei das weitere Behandeln und Transportieren der Bauteile erlauben, ohne diese Schritte signifikant negativ zu beeinflussen.

Es kann ferner bevorzugt sein, dass wenigstens einer von dem Träger und der Folie vor der elektrostatischen Beladung elektrostatisch entladen wird. In dieser Ausgestaltung können die vorbeschriebenen Vorteile besonders sicher und definiert erfolgen. Denn durch ein elektrostatisches Beladen nach einem elektrostatischen Entladen kann es erreicht werden, dass eine besonders definierte und homogene elektrostatische Aufladung in einen genau definierten Bereich ermöglicht wird, da lokale Ladungsspitzen verhindert werden können.

Beispielsweise kann eine Entladung in einem Bereich von größer 0 kV bis kleiner oder gleich 20 kV durchgeführt werden. Besonders bevorzugt werden die Folie und der Träger vor einem elektrostatischen Beladen auf einen Ladungswert von 0 entladen.

Hinsichtlich einer elektrostatischen Beladung und einer elektrostatischen Entladung kann es ferner bevorzugt sein, dass eine Einrichtung zum Aufbringen von elektrostatischen Ladungen zur Durchführung von Verfahrensschritt d) oder e) wenigstens eines aufweist aus einer zumindest teilweise aus einem elektrisch leitfähigen Material ausgebildete Leiste, Rolle, Bürste oder Lippe und einer Ionenstrahleinrichtung. Alternativ oder zusätzlich kann es vorgesehen sein, dass eine Einrichtung zum Ableiten von elektrostatischen Ladungen wenigstens eines aufweist aus einer zumindest teilweise aus einem elektrisch leitfähigen Material ausgebildete Leiste, Rolle, Bürste oder Lippe und einer Ionenstrahleinrichtung.

Beispielsweise kann eine Einrichtung zur Zuleitung oder Ableitung elektrostatischer Ladungen oder zur Ableitung von elektrostatischen Ladungen als eine Leiste ausgestaltet ist, welche den Träger und/oder die Folie elektrisch leitend kontaktiert und welche bevorzugt eine zu einer Oberfläche der Folie und/oder des Trägers im Wesentlichen parallel verlaufende und quer zur Verfahrrichtung der Folie beziehungsweise des Trägers ausgerichtete Anordnung aufweist. Im Wesentlichen parallel kann insbesondere eine Abweichung beziehungsweise Toleranz von ≤ 20%, insbesondere ≤ 10%, beispielsweise ≤ 1% des Abstands der Oberfläche der Leiste zu der Oberfläche der Folie beziehungsweise des Trägers bedeuten. Grundsätzlich kann die Leiste oberhalb und/oder unterhalb der zu beladenden Oberfläche positioniert sein. Durch eine derartige Ausgestaltung können auch große Flächen homogen und definiert ent- und beladen werden.

Alternativ oder zusätzlich kann es vorgesehen sein, dass die Einrichtung zur Ableitung elektrostatischer Ladungen und/oder Aufbringung elektrostatischer Ladungen wenigstens eine Rolle, Bürste oder Lippe aus einem leitfähigen Material aufweist, welche den Träger und/oder die Folie elektrisch leitend kontaktiert.

Bei einer Entladung kann es vorgesehen sein, dass die entsprechende Einrichtung zum Ableiten von elektrischen Ladungen mit einem elektrischen Massenpotential verbunden ist. Das elektrische Massenpotential kann beispielsweise durch eine Erdung bereitgestellt werden. Bei einer Beladung kann die Einrichtung zum Zuführen elektrischer Ladungen mit einer Ladungsquelle verbunden sein.

Die Leiste, Rolle, Bürste oder Lippe ist vorzugsweise zumindest im Kontaktbereich mit der lackhaltigen Deckschicht aus einem Material mit einer Leitfähigkeit ≥ 1*10³ Sm⁻¹ gebildet.

Weiter kann es vorgesehen sein, dass die Einrichtung zum Be- und/oder Entladen eine Ionisierungseinrichtung aufweist, mittels welcher ein ionisierter Luftstrahl über die Oberfläche der Folie oder des Trägers geleitet wird. Eine derartige Einrichtung kann auch als Ionenstrahleinrichtung bezeichnet werden. Es hat sich gezeigt, dass die Beaufschlagung mit ionisierter Luft geeignet ist, das Auftreten von elektrostatischer Aufladung der Träger weiter zu verringern oder zu vergrößern.

Erfindungsgemäß ist der Träger aus einem Kunststoff ausgebildet. Besonders bevorzugt kann der Träger einen Werkstoff umfassend einen Kunststoff und gegebenenfalls weitere Bestandteile aufweisen. Kunststoffe, welche bei der Herstellung entsprechender Paneele beziehungsweise der Träger eingesetzt werden können, sind beispielsweise thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein. Bevorzugt kann der Träger Talkum als Füllmaterial aufweisen, etwa in einer Menge, bezogen auf das Gesamtmaterial des Trägers, von ≥ 30 Gew.-% bis ≤ 70 Gew.-%, insbesondere von ≥ 40 Gew.-% bis ≤ 60 Gew. Darüber hinaus kann es vorgesehen sein, dass der Träger multilaminar aufgebaut ist, also aus einer Vielzahl an Folien. Dabei können die Folien zu der aufzukaschierenden Folie gleich oder verschieden sein.

Derartige Kunststoffträger sind insbesondere bei Dekorpaneelen für viele Anwendungen bevorzugt und lassen sich ferner problemlos elektrostatische be- und entladen, so dass das Verfahren insbesondere in dieser Ausgestaltung problemlos durchführbar ist.

Erfindungsgemäß ist vorgesehen, dass die Folie aus Kunststoff ausgebildet ist, beispielsweise daraus besteht oder auch noch weitere Bestandteile aufweist. Genauer kann die Folie eine Acrylat-basierte Kunststoffzusammensetzung, insbesondere eine polyurethanmodifizierte Acrylat-Kunststoffzusammensetzung, aufweisen, wobei die Folie die Kunststoffzusammensetzung in einer zumindest teilweise, beispielsweise vollständig, gehärteten Form aufweist, so dass sie für ein Kaschieren transportierbar und entsprechend behandelbar ist. Ein gegebenenfalls notwendiges Endhärten der Folie kann gegebenenfalls in einem weiteren Schritt im Anschluss an die Kaschierung erfolgen. Dies kann beispielsweise durch energiereiche und kurzwellige UV-Strahlung erfolgen und führt neben der radikalischen Polymerisation der Acrylatgruppen zu zusätzlichen Quervernetzungen der Monomere. Dadurch erhöht sich die Oberflächenhärte beträchtlich.

Dadurch wird vorteilhafter Weise erreicht, dass die Folie insgesamt flexibel ist und gleichzeitig für vielerlei Anwendungen, beispielsweise als Schutzschicht eines Dekorpaneels, besonders gute Schutzeigenschaften, wie Stabilität, Kratzfestigkeit, Hitzebeständigkeit, Wasserbeständigkeit und dergleichen, aufweist.

Bevorzugt kann die Kunststoffzusammensetzung der Folie ein Dipropylenglykoldiacrylat, bevorzugt in einer Menge von > 0 bis ≤ 15 Gew.-% bezogen auf die Kunststoffzusammensetzung, und ein Reaktionsprodukt aus Pentaerythrit, Epichlorhydrin und Acrylsäure, bevorzugt in einer Menge von ≥ 2 bis ≤ 15 Gew.-% bezogen auf die Kunststoffzusammensetzung, aufweisen.

Weiterhin kann die Folie jedoch auch aus weiteren, insbesondere thermoplastischen, Kunststoffen aufgebaut sein, wie etwa aus Polyethylenterephthalat (PET).

Weiterhin kann es bevorzugt sein, dass das Aufbringen der Folie auf den Träger als Thermokaschierung ausgeführt wird. Diese Ausgestaltung kann besonders vorteilhaft sein, da auf ein zusätzliches Kaschiermittel verzichtet werden kann. Dadurch kann das Verfahren hinsichtlich der Peripherie einfach umzusetzen sein und kann ferner kostengünstig möglich sein. Eine Behandlung unter erhöhter Temperatur und unter erhöhtem Druck kann dabei insbesondere bei Kunststofffolien, etwa wie vorstehend beschrieben, problemlos umsetzbar sein. Durch die vorbeschriebene elektrostatische Beladung von Folie und Träger kann ferner trotz eines fehelenden Kaschiermittels eine feste und langzeitstabile Verbindung von Träger und Folie ermöglicht werden.

Das erfindungsgemäße Verfahren zum Herstellen eines Dekorpaneels umfasst die weiteren Verfahrensschritte:
g) Einbringen von Verriegelungsmitteln an Kanten des Trägers; und
h) Aufbringen eines Dekors auf den Träger vor dem Aufbringen der Folie oder Aufbringen eines Dekors auf die Folie.

In diesem Verfahren wird eine beschriebene Kaschierung der Folie somit verwendet, um ein Dekorpaneel auszubilden. Dabei ist der Träge ein Kunststoffträger und die Folie eine Kunststofffolie wie vorstehend beschrieben.

Zur Ausbildung eines Dekorpaneels werden Verriegelungsmittel an Kanten des Trägers, beispielsweise umlaufend, vorgesehen. Dies kann beispielsweise durch eine spanende Bearbeitung der Trägerkanten realisierbar sein, wie es aus dem Stand der Technik grundsätzlich bekannt ist. Dadurch kann aus einer Vielzahl an Paneelen in ebenfalls bekannter Weise ein stabiler Verbund als Fußbodenbelag oder Deckenbelag oder Wandbelag geschaffen werden.

Hinsichtlich des Aufbaus des Paneels kann die Folie an verschiedenen Positionen in dem Paneelaufbau vorgesehen sein. Beispielsweise kann die Folie als Dekoruntergrund dienen, so dass die Folie unmittelbar auf das Trägermaterial oder eine weitere Schicht des Trägers aufkaschiert werden kann und die Folie anschließend, beispielsweise mittels eines digitalen Druckverfahrens, mit einem insbesondere eine Dekorvorlage imitierenden Dekor versehen werden kann. Ferner kann die Folie bereits vor dem Aufbringen auf den Träger bedruckt sein und somit als Dekorfolie dienen. Somit kann die Folie vor oder nach dem Aufbringen auf den Träger mit einem Dekor versehen, insbesondere bedruckt, werden.

Entsprechend kann es vorgesehen sein, dass Verfahrensschritt h) das Bedrucken des Trägers vor dem Aufbringen der Folie auf den Träger umfasst und/oder Verfahrensschritt h) das Bedrucken der Folie vor oder nach dem Aufbringen der Folie auf den Träger umfasst.

Bevorzugt kann es sein, wenn die Folie als Verschleißfolie Verwendung findet. In dieser Ausgestaltung kann Verfahrensschritt h) somit das Bedrucken des Trägers vor dem Aufbringen der Folie umfassen. Das Bedrucken des Trägers kann wiederum mittels eines digitalen Druckverfahrens erfolgen.

In der Ausgestaltung der Folie als Schutzschicht beziehungsweise Verschleißschicht kann die Folie als Schutzschicht dienen und das Dekor nach oben abdecken, um Dekor und Träger so vor äußeren Einflüssen zu schützen.

Dabei kann es vorgesehen sein, dass die Folie als Verschleißgrundfolie dient und mit einer Haptik versehen wird. Denn zum Schutz der aufgebrachten Dekorschicht sind in der Regel Verschleiß- oder Deckschichten oberhalb der Dekorschicht aufgebracht. Vielfach ist es vorgesehen, dass in solche Verschleiß- oder Deckschichten eine, eine Dekorvorlage imitierende, Oberflächenstrukturierung eingebracht ist, so dass die Oberfläche des Dekorpaneels eine haptisch wahrnehmbare Struktur aufweist, welche ihrer Form und ihrem Muster dem aufgebrachten Dekor angepasst ist, um so eine möglichst originalgetreue Nachbildung eines natürlichen Werkstoffes auch hinsichtlich der Haptik zu erhalten.

Zum Aufbringen der Haptik kann es vorgesehen sein, dass auf die Folie eine weitere Schicht aufgebracht wird, welche mit einer Struktur versehen wird. Hierzu kann es bevorzugt sein, dass nach dem Aufbringen der Folie auf den Träger die Folie mit einer strukturierten Lackschicht beziehungsweise mit einer lackhaltigen Deckschicht versehen wird, also mit einer Lackschicht, welche strukturiert und gehärtet wird. Letzteres kann beispielsweise mittels UV-Strahlung erfolgen. Insbesondere, wenn die Folie und der Lack aus dem gleichen, etwa wie vorstehend beschrieben ausgestalteten Material bestehen, kann bei einer Härtung, etwa Endhärtung, des Lacks zur Fixierung der Struktur auch eine Endhärtung der Folie erfolgen. Ein Strukturieren des Lacks kann beispielsweise durch eine Presse oder das Drucken einer Verdrängungstinte erfolgen, wobei die Lackschicht vor dem Einbringen der Struktur bevorzugt teilgehärtet wird.

Ferner kann eine weitere Folie aufkaschiert werden, insbesondere nach dem vorstehend beschriebenen Verfahren, welche dann mit einer Struktur versehen wird.

Alternativ kann es vorgesehen sein, dass die Folie selbst mit einer Struktur versehen wird. Dies kann etwa möglich sein, indem die aufkaschierte Folie nach dem Aufbringen auf den Träger oder dass die aufzukaschierende Folie vor dem Aufbringen auf den Träger, beispielsweise mittels Prägemitteln mit einer Struktur versehen wird.

Es kann weiterhin vorgesehen sein, dass die Folie und/oder die lackhaltige Deckschicht Hartstoffe aufweist, vorzugsweise in einer Menge zwischen ≥ 5 Gew.-% und ≤ 40% Gew.-%, wobei die Hartstoffe vorzugsweise einen mittleren Korndurchmesser zwischen 10 µm und 250 µm aufweisen. Beispiele umfassen Titannitrid, Titancarbid, Siliciumnitrid, Siliciumcarbid, Borcarbid, Wolframcarbid, Tantalcarbid, Aluminiumoxid (Korund), Zirconiumoxid, Zirconiumnitrid oder Mischungen dieser.

Hinsichtlich weiterer Vorteile und technischer Merkmale des Verfahrens zum Herstellen eines Dekorpaneels wird auf die Beschreibung des Verfahrens zum Aufbringen einer Folie auf einen Träger, die Figur und die weitere Beschreibung verwiesen.

Die Erfindung wird nachfolgend anhand einer Figur weiter erläutert.

Es zeigt:

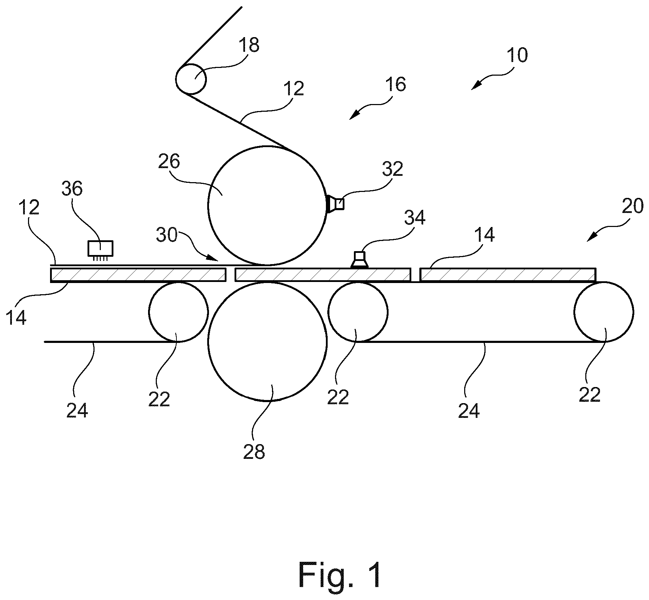

Fig. 1 eine schematische Darstellung einer Anordnung zum Durchführen eines Verfahrens gemäß der Erfindung.

In der Figur 1 ist eine Anordnung 10 gezeigt, mittels welcher eine Folie 12 auf einen Träger 14 aufgebracht werden kann. Hierzu ist eine Zuführeinrichtung 16 gezeigt, mittels welcher die Folie 12 bereitgestellt werden kann. Die Zuführeinrichtung 16 umfasst etwa eine Umlenkwalze 18. Ferner ist ein Transportsystem 20 gezeigt, auf dem ein Mehrzahl an plattenförmigen Trägern 14 gefördert werden kann. Das Transportsystem 20 umfasst durch Walzen 22 geführte umlaufende Bänder 24, auf denen die Träger 14 aufliegen.

Ferner gezeigt sind Kalanderwalzen 26, 28, zwischen denen ein Walzenspalt 30 ausbildbar ist. Der Träger 14 läuft auf den Bändern 24 in den Walzenspalt 30 und die Folie 12 wird durch die Kalanderwalze 26 in den Walzenspalt 30 auf en Träger 14 geführt. In der Ansicht gemäß der Figur laufen Träger 14 und Folie 12 von der rechten Seite nach links in den Walzenspat 30 ein. In dem Walzenspalt 30 kann die Folie 12 auf die Träger 14 aufgebracht werden. Hierzu können die Kalanderwalzen 26, 28 oder zumindest die die Folie 12 führende Kalanderwalze 26 gegebenenfalls beheizt sein und kann durch die Kalanderwalzen 26, 28 ein Anpressdruck der Folie 12 auf den Träger 14 ausgeübt werden. Dadurch kann die Folie 12 beispielsweise mittels Thermokaschieren auf den Träger 14 aufgebracht werden. Es sei jedoch erwähnt, dass grundsätzlich auch der Träger 14 geheizt werden kann und dass für das Erwärmen von Träger 14 und Folie 12 frei wählbare Heizmittel anwendbar sein können.

Hinter den Kalanderwalzen 26, 28 beziehungsweise nach dem Walzenspalt 30 ist die Folie 12 bei einer Thermokaschierung fest mit dem Träger 14 verbunden.

Bei der Verwendung eines Kaschiermittels, etwa eines Lackes, kann dieses durch die Strahlungseinheit 36, die etwa UV-Strahlung emittiert, gehärtet werden. Dadurch kann die Folie 12, die vor der Strahlungseinheit 36 noch lediglich im Klebebett liegt, nach der Strahlungseinheit 36 fest an dem Träger 12 haften. Beispielsweise kann die Strahlungseinheit 36 in einem Bereich von ungefähr 200mm nach dem Walzenspalt 30 angeordnet sein.

Anschließend können weitere Verarbeitungsschritte, wie etwa das Vorsehen einer strukturierten Lackschicht auf der Folie 12 oder grundsätzlich eine Strukturierung der Oberfläche folgen. Ferner können vor oder nach dem Walzenspalt 30 Verriegelungsmittel in Kanten des Trägers 14 eingebracht werden, etwa wenn das Verfahren im Rahmen der Herstellung eines Dekorpaneels verwendet werden soll. Beispielsweise in letzterem Fall kann auch ein Dekor auf den Träger 14 aufgebracht werden, was ebenfalls vor oder nach dem Walzenspalt 30 erfolgen kann.

Um ein qualitativ besonders hochwertiges Aufbringen der Folie auf den Träger zu ermöglichen ist ferner eine Einrichtung 32 zum Aufbringen von elektrostatischen Ladungen auf die Folie 12 vorgesehen und ist ferner eine Einrichtung 34 zum Aufbringen von elektrostatischen Ladungen auf den Träger 14 vorgesehen. Die Einrichtungen 32, 34 sind etwa als jeweils eine Leiste ausgestaltet, welche bevorzugt eine zu einer Oberfläche der Folie 12 beziehungsweise des Trägers 14 im Wesentlichen parallel verlaufende und quer zur Verfahrrichtung der Folie 12 beziehungsweise des Trägers 14 ausgerichtete Anordnung aufweist.

Dadurch kann es ermöglicht werden, dass die Folie 12 vor dem Aufbringen auf den Träger 14 elektrostatisch beladen wird, und dass der Träger 14 vor dem Aufbringen der Folie 12 auf den Träger 14 elektrostatisch beladen wird. Genauer soll erfolgen, dass die elektrostatische Beladung des Trägers 14 und der Folie 12 derart ausgeführt wird, dass die Folie 12 und der Träger 14 entgegengesetzt elektrostatisch beladen werden.

Im Detail ist es vorgesehen, dass die Folie 12 positiv beladen wird und dass der Träger 14 negativ beladen wird, wobei die Folie 12 beladen wird auf einen Bereich von ≥ 50V bis ≤ 150V und wobei der Träger 14 beladen wird in einen Bereich von ≥ -750V bis ≤ -150V.

Nicht gezeigt sind optionale Einrichtungen durch die es möglich wird, dass wenigstens einer von dem Träger 14 und der Folie 12, beispielsweise sowohl der Träger 14 als auch die Folie 12 vor der elektrostatischen Beladung elektrostatisch entladen wird.

### Bezugszeichenliste

- 10: Anordnung
- 12: Folie
- 14: Träger
- 16: Zuführeinrichtung
- 18: Umlenkwalze
- 20: Transportsystem
- 22: Walze
- 24: Band
- 26: Kalanderwalze
- 28: Kalanderwalze
- 30: Walzenspalt
- 32: Einrichtung zum Aufbringen von elektrostatischen Ladungen
- 34: Einrichtung zum Aufbringen von elektrostatischen Ladungen
- 36: Strahlungseinheit

## Patentansprüche

1. Verfahren zur Herstellung eines Dekorpaneels umfassend das Aufbringen einer Folie (12) auf einen Träger (14), aufweisend die Verfahrensschritte:
a) Bereitstellen eines mit der Folie (12) zu versehenden Träger (14), wobei der Träger (14) aus Kunststoff ausgebildet ist,
b) Bereitstellen einer Folie (12), und
c) Aufbringen der Folie (12) auf zumindest einen Teilbereich des Trägers (14), wobei die Folie (12) aus Kunststoff ausgebildet ist,
g) Einbringen von Verriegelungsmitteln an Kanten des Trägers (14), und
h) Aufbringen eines Dekors auf den Träger (14) vor dem Aufbringen der Folie (12) auf den Träger (14) oder Aufbringen eines Dekors auf die Folie (12), **dadurch gekennzeichnet, dass** d) die Folie (12) vor dem Aufbringen auf den Träger (14) elektrostatisch beladen wird, und e) der Träger (14) vor dem Aufbringen der Folie (12) auf den Träger (14) elektrostatisch beladen wird, wobei f) die elektrostatische Beladung des Trägers (14) und der Folie (12) derart ausgeführt wird, dass die Folie (12) und der Träger (14) entgegengesetzt elektrostatisch beladen werden, wobei
f)die Folie (12) positiv beladen wird auf einen Bereich von ≥ 50V bis ≤ 150V und der Träger (14) negativ beladen wird auf einen Bereich von ≥ -750V bis ≤ -150V.

2. Verfahren nach Anspruch 1, **dadurch gekennzeichnet, dass** eine Einrichtung (32, 34) zum Aufbringen von elektrostatischen Ladungen zur Durchführung von Verfahrensschritt d) oder e) wenigstens eines aufweist aus einer zumindest teilweise aus einem elektrisch leitfähigen Material ausgebildeten Leiste, Rolle, Bürste, Lippe und einer Ionenstrahleinrichtung.

3. Verfahren nach einem der vorherigen Ansprüche, **dadurch gekennzeichnet, dass** wenigstens einer von dem Träger (14) und der Folie (12) vor der elektrostatischen Beladung elektrostatisch entladen wird.

4. Verfahren nach Anspruch 3, **dadurch gekennzeichnet, dass** eine Einrichtung zum Ableiten von elektrostatischen Ladungen wenigstens eines aufweist aus einer zumindest teilweise aus einem elektrisch leitfähigen Material ausgebildeten Leiste, Rolle, Bürste, Lippe und einer Ionenstrahleinrichtung.

5. Verfahren nach einem der vorherigen Ansprüche, **dadurch gekennzeichnet, dass** das Aufbringen der Folie (12) auf den Träger (14) als Thermokaschierung oder als Nasskaschierung ausgeführt wird.

6. Verfahren nach einem der vorhergehenden Ansprüche, **dadurch gekennzeichnet, dass** Verfahrensschritt h) das Bedrucken des Trägers (14) vor dem Aufbringen der Folie (12) auf den Träger (14) umfasst.

7. Verfahren nach einem der Ansprüche 1 bis 5, **dadurch gekennzeichnet, dass** Verfahrensschritt h) das Bedrucken der Folie (12) vor oder nach dem Aufbringen der Folie (12) auf den Träger (14) umfasst.

8. Verfahren nach einem der vorhergehenden Ansprüche, **dadurch gekennzeichnet, dass** die Folie (12) mit einer Struktur versehen wird.

9. Verfahren nach einem der vorhergehenden Ansprüche, **dadurch gekennzeichnet, dass** auf die Folie (12) eine weitere Schicht aufgebracht wird, welche mit einer Struktur versehen wird.

## Claims

1. Method for producing a decorative panel comprising the application of a film (12) to a substrate (14), including the method steps:
a) providing a substrate (14) to be provided with the film (12), wherein the substrate (14) is made of plastic;
b) providing a film (12); and
c) applying the film (12) onto at least a partial area of the substrate (14), wherein the film (12) is made of plastic, wherein
d) the film (12) is electrostatically charged before being applied to the substrate (14), wherein
e) the substrate (14) is electrostatically charged before the film (12) is applied to the substrate (14),
g) inserting interlocking means at edges of the substrate (14); and
h) applying a decoration onto the substrate (14) prior to applying the film (12) to the substrate (14) or applying a decoration onto the film (12), **characterized in that** in a step f) the electrostatic charging of the substrate (14) and the film (12) are carried out in such a way that the film (12) and the substrate (14) are electrostatically charged oppositely, wherein
the film (12) is positively charged to a range of ≥ 50 V to ≤ 150 V and the substrate (14) is negatively charged to a range of ≥ -750 V to ≤ -150 V.

2. Method according to any one of the preceding claims, **characterized in that** a device (32, 34) for applying electrostatic charges for carrying out method step d) or e) comprises at least one of a strip, a roller, a brush, a lip formed at least partially from an electrically conductive material, and an ion beam device.

3. Method according to any one of the preceding claims, **characterized in that** at least one of the substrate (14) and the film (12) is electrostatically discharged prior to electrostatic charging.

4. Method according to claim 6, **characterized in that** a device for dissipating electrostatic charges comprises at least one of a strip, a roller, a brush, a lip formed at least partially from an electrically conductive material, and an ion beam device.

5. Method according to claim 1, **characterized in that** the application of the film (12) to the substrate (14) is carried out as thermo lamination or as wet lamination.

6. Method according to any one of the preceding claims, **characterized in that** method step h) comprises printing the substrate (14) before applying the film (12) to the substrate (14).

7. Method according to any one of the claims 1 to 5, **characterized in that** method step h) comprises printing the film (12) before or after applying the film (12) to the substrate (14).

8. Method according to any one of the preceding claims, **characterized in that** the film (12) is provided with a structure.

9. Method according to any one of the preceding claims, **characterized in that** a further layer is applied to the film (12), which is provided with a structure.

## Revendications

1. Procédé de fabrication d'un panneau décoratif comprenant l'application d'un film (12) sur un support (14), comprenant les étapes du procédé:
a) la fourniture d'un support (14) à munir du film (12), dans lequel le support (14) étant réalisé en matière plastique,
b) la fourniture d'un film (12), et
c) l'application du film (12) sur au moins une partie du support (14), dans lequel le film (12) étant réalisé en matière plastique,
g) l'insertion de moyens de verrouillage sur les bords du support (14), et
h) l'application d'un décor sur le support (14) avant l'application du film (12) sur le support (14) ou l'application d'un décor sur le film (12),
**caractérisé en ce que**
d) le film (12) étant chargé électrostatiquement avant qu'il soit appliqué sur le support (14), et e) le support (14) étant chargé électrostatiquement avant que le film (12) soit appliqué sur le support (14), dans lequel
f) la charge électrostatique du support (14) et du film (12) étant réalisée de telle sorte que le film (12) et le support (14) sont chargés électrostatiquement de manière opposée, dans lequel
le film (12) est chargée positivement dans une plage de ≥ 50V à ≤ 150V et le support (14) est chargée négativement dans une plage de ≥ -750V à ≤ -150V.

2. Procédé selon la revendication 1, **caractérisé en ce qu'**un dispositif (32, 34) pour l'application de charges électrostatiques pour la mise en œuvre de l'étape (d) ou (e) du procédé comprend au moins un élément parmi une bande, un rouleau, une brosse, un rebord et un dispositif à faisceau ionique, formé au moins partiellement d'un matériau électriquement conducteur.

3. Procédé selon l'une quelconque des revendications précédentes, **caractérisé en ce qu'**au moins un parmi le support (14) et le film (12) est déchargé électrostatiquement avant le chargement électrostatique.

4. Procédé selon la revendication 3, **caractérisé en ce qu'**un dispositif de décharge de charges électrostatiques comprend au moins un élément parmi une bande, un rouleau, une brosse, un rebord et un dispositif à faisceau d'ions, formé au moins partiellement d'un matériau électriquement conducteur.

5. Procédé selon l'une quelconque des revendications précédentes, **caractérisé en ce que** l'application du film (12) sur le support (14) est réalisée sous forme de stratification thermique ou de stratification par voie humide.

6. Le procédé selon l'une quelconque des revendications précédentes, **caractérisé en ce que** l'étape (h) du procédé comprend l'impression du support (14) avant l'application du film (12) sur le support (14).

7. Le procédé selon l'une quelconque des revendications 1 à 5, **caractérisé en ce que** l'étape (h) du procédé comprend l'impression du film (12) avant ou après l'application du film (12) sur le support (14).

8. Procédé selon l'une quelconque des revendications précédentes, **caractérisé en ce que** le le film (12) est pourvu d'une structure.

9. Procédé selon l'une quelconque des revendications précédentes, **caractérisé en ce qu'**une couche supplémentaire est appliquée sur le film (12), qui est pourvu d'une structure.
